# DEMANDE DE BREVET EUROPEEN

(11) **EP 3 103 625 A1**
(43) Date de publication de la demande: **14.12.2016**
(21) Numéro de dépôt: 15171058.9
(22) Date de dépôt: 08.06.2015
(51) Int. Cl.: B29C 70/34, B29C 70/88, B29C 70/20, A44C 27/00, G04B 19/12, G04B 29/02, G04B 37/22, B29C 37/00, B29L 31/00

(54) **MATÉRIAU COMPOSITE POUR PIÈCES D'HORLOGERIE ET BIJOUTERIE**

(71) Demandeur: The Swatch Group Research and Development Ltd., 2074 Marin (CH)
(72) Inventeur: François, Nicolas, 2000 Neuchâtel (CH); Winkler, Yves, 3185 Schmitten (CH); Muller, Juliette, 2520 La Neuveville (CH)
(74) Mandataire: Ravenel, Thierry Gérard Louis

(57) **Abrégé**

L'invention se rapporte à un matériau composite (1) pour la réalisation de pièces, comprenant au moins une première couche (10) formée de nappes unidirectionnelles en filaments synthétiques pré-imprégnés d'une résine thermodurcissable, les nappes unidirectionnelles (10) présentant une première orientation, et au moins une deuxième couche (20) formée par une feuille mince en un matériau métallique.

## Description

### Domaine de l'invention

La présente invention concerne le domaine technique des matériaux composites à base de nappes unidirectionnelles. Plus précisément, l'invention concerne un matériau pour la réalisation de pièces d'horlogerie et de bijouterie, ainsi qu'un procédé de fabrication de pièces composites à partir d'un empilement d'un tel matériau, ainsi que les pièces obtenues.

### Arrière-plan de l'invention

De nombreux matériaux composites existent sur le marché et sont connus pour leurs propriétés mécaniques ainsi que leur légèreté. L'un de ces composites est le composite pré-imprégné à plis minces qui peut être formé de filaments de verre, de carbone ou encore d'aramide qui sont préalablement enduites d'une résine thermodurcissable.

Les composites pré-imprégnés à plis minces comprennent généralement plusieurs nappes unidirectionnelles superposées les unes sur les autres selon des angles différents. Une nappe unidirectionnelle est constituée exclusivement ou quasi-exclusivement de filaments synthétiques déposés parallèlement les uns aux autres et pré-imprégnés de manière à faciliter la manipulation de la nappe. De tels composites sont commercialisés par North Thin Ply Technology par exemple, ou encore par Hexcel.

Ainsi, il est connu du document FR 2 937 583 de réaliser des pièces en matériaux composites à base de nappes unidirectionnelles pré-imprégnées en filament composites.

Pour former une structure, ou une préforme, plusieurs couches sont empilées les unes au-dessus des autres, selon une orientation différente, pour former la préforme qui sera solidarisée sous une pression définie et une température définie.

En raison de leurs bonnes caractéristiques mécaniques et de leur apparence finale, les composites pré-imprégnés à plis minces sont utilisés dans de nombreux domaines, tels que l'horlogerie où est particulièrement appréciée la combinaison de la légèreté et des bonnes propriétés mécaniques. Un tel matériau composite est notamment utilisé pour les pièces d'habillage telles que la carrure, la lunette ou encore le fond.

Cependant, les matériaux composites actuels confèrent un aspect sportif et ne permettent pas d'obtenir des pièces alliant la légèreté des composites et l'aspect esthétiques des métaux. De plus, un tel matériau s'avère fragile, notamment au niveau de la résistance aux chocs et aux rayures.

### Résumé de l'invention

L'invention a notamment pour objectif de pallier aux différents inconvénients de ces techniques connues.

Plus précisément, un objectif de l'invention est de fournir un matériau composite adapté à la réalisation de pièces présentant des propriétés mécaniques satisfaisantes, notamment une bonne résistance aux chocs, griffures et rayures, tout en conservant un aspect esthétique attrayant.

Ces objectifs, ainsi que d'autres qui apparaîtront plus clairement par la suite, sont atteints selon l'invention à l'aide d'un matériau composite, comprenant au moins une première couche formée d'au moins une nappe unidirectionnelle en filaments synthétiques pré-imprégnés de résine thermodurcissable, l'au moins une nappe unidirectionnelle présentant une première orientation, et au moins une deuxième couche formée par une feuille mince en un matériau métallique.

Conformément à d'autres variantes avantageuses de l'invention :
- le matériau métallique est un alliage nickel titane ;
- le matériau métallique est un métal ou un alliage au moins partiellement amorphe ;
- la nappe unidirectionnelle en filaments synthétiques présente une épaisseur comprise entre à 30 µm et 150 µm ;
- la feuille mince en matériau au moins partiellement amorphe présente une épaisseur comprise de préférence entre 40 µm et 150 µm, et plus préférentiellement entre 80 µm et 100 µm ;
- l'orientation des filaments synthétiques de la nappe unidirectionnelle est choisie parmi l'orientation à -90° -45 °, +45 ou 0° ;
- la première couche comprend de préférence au moins deux nappes unidirectionnelles superposées, chacune ayant une orientation distincte, et plus préférentiellement au moins trois nappes unidirectionnelles superposées, chacune ayant une orientation distincte ;
- le matériau composite comprend une pluralité de premières et deuxièmes couches ;
- les filaments synthétiques sont choisis parmi : les filaments carbone, les filaments de verre, les filaments en carbure de silice, les filaments de polyéthylène de masse molaire très élevée (UHMWPE), les filaments de polymère à cristaux liquides (LCP), les filaments de quartz, les filaments de carbure de silicium, les filaments en aramides, ou encore les filaments en polytéréphtalate d'éthylène (PET). ;
- les filaments synthétiques peuvent recevoir une coloration ;
- la résine thermodurcissable est une résine de la famille des polyépoxydes, de la famille des acryliques, de la famille des polyuréthanes ou encore de la famille des polysiloxanes ;
- la résine thermodurcissable peut comprendre des charges photoluminescentes, des charges de nanotubes de carbone ou encore des charges de nano-diamants.

L'invention a également pour objet un procédé de réalisation d'une pièce en matériau composite comportant au moins une première couche, et au moins une deuxième couche, le procédé comportant les étapes suivantes :
- réaliser au moins une première couche, avec des filaments synthétiques, sous forme d'au moins une nappe unidirectionnelle pré-imprégnée de résine thermodurcissable selon une première direction d'orientation ;
- réaliser au moins une deuxième couche, avec un matériau métallique, sous la forme d'une feuille mince ;
- constituer une préforme en assemblant par empilage au moins une première couche et au moins une deuxième couche ;
- solidariser la préforme par le biais d'une étape de polymérisation ou réticulation de la résine sous pression négative et selon un cycle de température, puis refroidir la préforme.

Conformément à d'autres variantes avantageuses du procédé selon l'invention :
- la première couche comprend une pluralité de nappes unidirectionnelles pré-imprégnées ;
- on superpose une pluralité de première et deuxième couches.

L'invention concerne aussi et notamment toute pièce d'horlogerie ou de bijouterie réalisée en matériau composite conformément à l'invention et obtenue par le procédé précédemment décrit de l'invention.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue en coupe d'un matériau composite conforme à l'invention ;
- les figures 2a, 2b et 2c représentent des schémas illustrant les combinaisons possibles pour la réalisation du matériau composite conforme à l'invention.

### Description détaillée des modes de réalisation préférés

L'invention concerne un matériau composite 1 pour la réalisation de pièces en composite. Le matériau composite 1 selon l'invention comprend au moins une première couche 10 formée d'au moins une nappe unidirectionnelle en filaments synthétiques pré-imprégnés de résine thermodurcissable, la nappe unidirectionnelle présentant une première orientation, et au moins une deuxième couche 20 formée par une feuille mince en un matériau métallique.

La résine thermodurcissable époxy Araldite® GY 282 de Huntsman permet d'obtenir les meilleurs résultats pour la réalisation des nappes unidirectionnelles. Le matériau composite final peut présenter, par exemple, une alternance de cent cinquante premières et deuxièmes couches

Selon un mode de réalisation préférentiel de l'invention, le matériau métallique utilisé est un alliage nickel titane. Un tel alliage a pour avantage d'avoir d'excellentes caractéristiques d'amortissement et de résistance à la fatigue. Une fois consolidé le composite obtenu combine légèreté, grande résistance et bonnes propriétés d'amortissement des chocs.

Bien évidemment d'autres métaux ou alliages peuvent être utilisés, comme de l'or, du titane, du cuivre, ou encore de l'aluminium.

Selon un autre mode de réalisation de l'invention, le matériau métallique utilisé est un métal ou un alliage au moins partiellement amorphe, comme des alliages à base zirconium, à base nickel, ou encore à base platine. Un tel matériau a pour avantage de minimiser les risques de corrosion et d'accroitre la résistance mécanique, ce qui permet une meilleure tenue du matériau composite dans le temps.

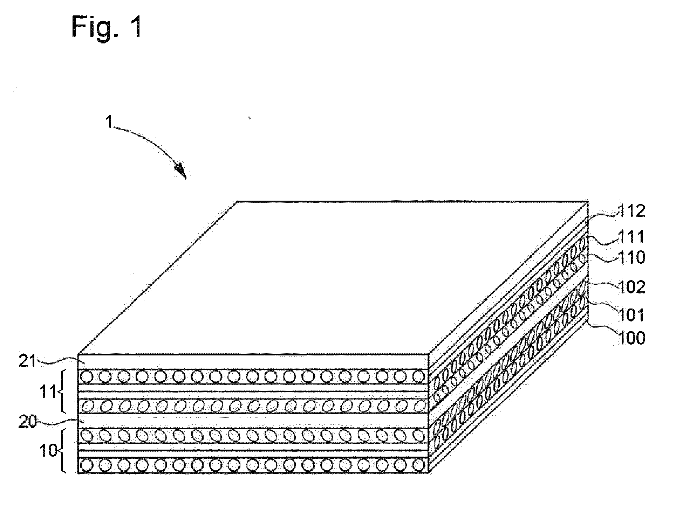

Comme on peut l'observer à la figure 1, le matériau composite 1 peut être composé d'une pluralité de couches 10, 11, 12, 13 formées d'au moins une nappe unidirectionnelle pré-imprégnée en filaments synthétiques et d'une pluralité de couches 20, 21, 22, 23 formées par une feuille mince en matériau métallique.

Selon un mode de réalisation de l'invention, la nappe unidirectionnelle pré-imprégnée en filaments synthétiques formant la première couche 10 a une épaisseur comprise entre 30 µm et 150 µm, et la feuille mince en matériau métallique présente une épaisseur comprise de préférence entre 10 µm et 150 µm, et plus préférentiellement entre 80 et 100 µm.

Selon un mode de réalisation préférentiel de l'invention, la première couche peut comprendre au moins deux nappes unidirectionnelles superposées, chacune ayant une orientation distincte, et de manière plus préférentielle, trois nappes unidirectionnelles superposées, chacune ayant une orientation distincte.

Selon les besoins de l'homme du métier, notamment pour des questions de résistance, l'orientation des filaments synthétiques est choisie parmi l'orientation à -90°, -45°, +45° ou 0° par exemple. On peut également imaginer une succession de nappes unidirectionnelles avec une incrémentation de un degré à chaque nappe.

L'orientation des filaments synthétiques les uns par rapport aux autres est choisie afin d'obtenir une symétrie dans le complexe permettant d'obtenir les caractéristiques mécaniques voulues. On note que les couples d'orientations privilégiées sont -90%° et -45°/+45°.

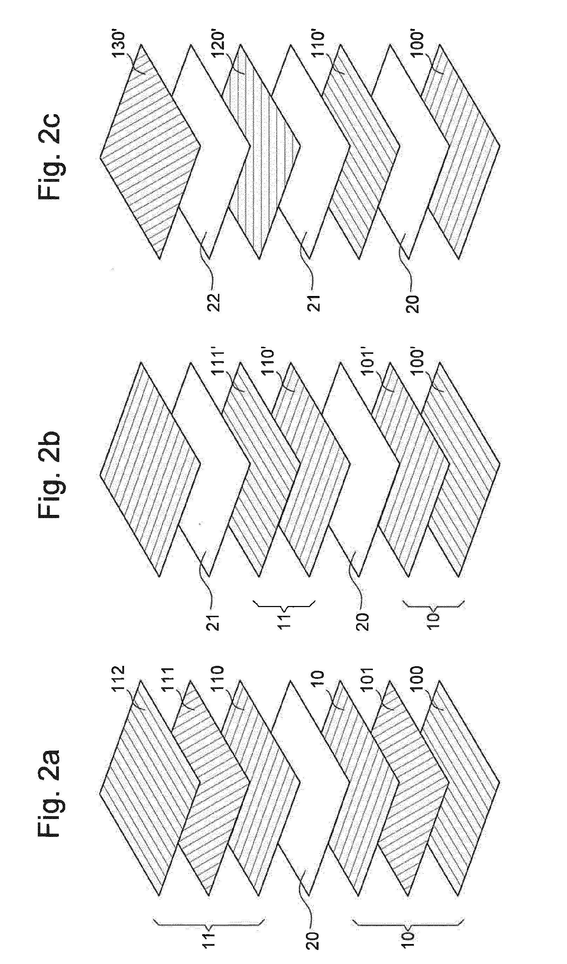

Selon un premier exemple de réalisation illustré à la figure 2a, la première couche 20 comprend trois nappes unidirectionnelles superposées les unes sur les autres, la première nappe unidirectionnelle 100 étant orientée à 0°, la deuxième nappe unidirectionnelle 101 étant orientée à +45° et la troisième nappe unidirectionnelle 102 étant orientée à 90°. La deuxième couche 20 peut être constituée d'au moins une feuille en alliage nickel titane par exemple, ou bien un métal ou un alliage amorphe ou partiellement amorphe. La deuxième couche 20 peut être recouverte par une nouvelle couche 11 qui peut être identique à la première couche, la nouvelle couche 11 pouvant également présenter trois nappes unidirectionnelles 110, 111 et 112 avec des orientations différentes, par exemple 90°, -45° et 0°.

Il peut être intéressant, pour des raisons esthétiques, de superposer deux feuilles ou plus en matériau métallique pour former la deuxième couche 20 de manière à mieux visualiser ce composant au niveau de l'aspect final de la pièce en composite. En effet, dans l'exemple précédent, pour une couche 10 de trois nappes unidirectionnelles d'une épaisseur de 30 µm par exemple, une épaisseur supérieure ou égale à 90 µm est souhaitable pour pouvoir bien visualiser la couche de matériau métallique au sein du matériau composite.

Selon un deuxième exemple de réalisation illustré à la figure 2b, la première couche 10 comprend deux nappes unidirectionnelles superposées les unes sur les autres, la première nappe unidirectionnelle 100' étant orientée à 45°, et la seconde nappe unidirectionnelle étant orientée à -45°. La deuxième couche 20 peut être constituée d'au moins une feuille en alliage nickel titane par exemple, ou bien un métal ou un alliage amorphe ou partiellement amorphe. La deuxième couche 20 peut être recouverte par une nouvelle couche 11 qui peut être identique à la première couche 10, la nouvelle couche 11 pouvant également présenter deux nappes unidirectionnelles 110' et 111' avec des orientations différentes, par exemple 0° et 90°. Là encore, les épaisseurs peuvent varier selon les besoins de l'homme du métier et du résultat que l'on souhaite obtenir. En augmentant le nombre de nappes unidirectionnelles par couche il est évident que le matériau composite obtenu sera plus solide mais l'aspect esthétique se rapprochera d'un aspect dit sportif, ce qui n'est pas souhaité ici.

Selon un autre mode de réalisation, la première couche 10 comprend une seule nappe unidirectionnelle 100" superposée directement sur la deuxième couche 20 qui peut être constituée d'une feuille en alliage nickel titane par exemple, ou bien un métal ou un alliage amorphe ou partiellement amorphe. La deuxième couche 20 peut être recouverte par une nouvelle couche qui peut être identique à la première couche, la nouvelle couche pouvant également présenter une seule nappe unidirectionnelle 110" avec des orientations différentes, par exemple 90°, -45° et 0°.

Bien évidemment, et selon les besoins de l'homme du métier, le matériau composite 1 peut comprendre une pluralité de première et deuxième couches de manière à atteindre l'épaisseur désirée avant d'usiner ce dernier. Idéalement, le matériau composite comprend entre huit couches et cinq cent couches au total, le matériau pouvant comprendre 70% de première couche et 30% de deuxième couche.

Il existe une large variété de filaments synthétiques, dans le cadre de l'invention, les filaments peuvent être choisis parmi ceux-ci : les filaments de carbone, les filaments de verre, les filaments en carbure de silice, les filaments en polyéthylène de masse molaire très élevée (UHMWPE) comme le Dyneema®, les filaments de Vectran®, les filaments de quartz comme le Quartzel®, les filaments d'aramide, les filaments de carbure de silicium comme le Nicalon®, ou encore des filaments en polytéréphtalate d'éthylène (PET).

Selon une autre variante de l'invention, les filaments peuvent être d'origine naturelle tels que les filaments cellulosiques ou les filaments de soie.

Selon les besoins de l'homme du métier, et notamment pour l'obtention de propriétés particulières, la première couche 10 peut être composée de nappes de matières différentes ou encore de nappes avec des filaments de matières différentes. Par exemple, des filaments de carbone et des filaments de polyéthylène ultra haute densité pourraient être utilisés chacun dans une nappe distincte, ou dans une même nappe.

Ces filaments, comme le Vectran®, le PET ou les filaments de verre, peuvent recevoir une coloration dans la masse lors de leur fabrication de manière à obtenir un aspect esthétique particulier, on peut par exemple imaginer des filaments colorés permettant de contraster avec la couche de matériau métallique et faire ainsi mieux ressortir le matériau métallique. On peut également imaginer une alternance de la couleur des filaments au sein d'une même nappe de filaments.

De manière à solidariser les filaments et les couches entre elles, une résine ou matrice, de type thermodurcissable est choisie en fonction des propriétés souhaitées. Cette résine peut être une résine époxy, une résine acrylique, une résine polyuréthane ou une résine polysiloxane. Selon une variante préférée de l'invention, les nappes unidirectionnelles sont pré-imprégnées en appliquant la résine sur les filaments avant de superposer les couches les unes sur les autres.

De manière à favoriser l'adhésion des couches en matériau métallique aux nappes unidirectionnelles de filaments synthétiques il est nécessaire de réaliser un prétraitement de la deuxième couche 20 en matériau métallique par le traitement suivant valable pour les aciers, les alliages d'aluminium et le titane. Un tel traitement permet d'enlever les graisses et la couche superficielle d'oxydes et donc de préparer de manière optimale la feuille de la deuxième couche 20 au collage avec la nappe unidirectionnelle.

La feuille métallique est préparée au collage par une succession de traitement en bain avec différents solvants puis rincée sous eau déminéralisée et séchée dans un four sous vide primaire. Un primaire de type silane fonctionnalisé est ensuite immédiatement appliqué sur les deux faces par enduction.

Plus précisément, la feuille subit un nettoyage préliminaire avec un solvant tel que de l'acétone, un dégraissage en phase aqueuse dans une cuve à ultrasons avec un lessivage, un rinçage sous pression avec de l'eau déminéralisée avant d'être immergée. Ensuite, la feuille subit une attaque acide dans un bain. La feuille est ensuite rincée avec de l'eau déminéralisée puis immergée. Finalement, la feuille est égouttée au moyen d'un soufflage, puis séchée dans un four.

Il est à noter que dans le cas où la feuille métallique est en acier inoxydable, une passivation est nécessaire avant l'égouttage et le soufflage.

Une étape supplémentaire peut être prévue pour appliquer immédiatement après le séchage, par enduction, un primaire de type silane fonctionnalisé sur les deux faces.

Selon un aspect particulièrement avantageux de l'invention, la feuille mince en matériau métallique peut être de plus micro-perforée de telle façon que la résine des nappes unidirectionnelles pré-imprégnées pénètre la feuille mince en matériau métallique et ainsi augmente la ténacité et la durabilité de l'assemblage. Selon une variante de l'invention, la feuille mince en matériau métallique peut être texturée par microbillage ou par calandrage ou par attaque chimique ou par laser en surface pour que les nappes unidirectionnelles pré-imprégnées adhèrent mieux à la feuille en matériau métallique.

Selon un mode de réalisation particulier de l'invention, la résine peut comprendre des charges de nanotubes de carbone ou encore des charges de nano-diamants à base de carbure de silicium par exemple, de manière à augmenter les modules de traction ou de flexion ou pour améliorer la résistance à la rayure. Par exemple, un ajout de 0,5% à 1,5% de charges de nano-diamants permet d'augmenter la dureté du matériau, ce qui accroit sa résistance aux rayures et frottements.

La résine peut également comprendre des charges colorées et/ou photoluminescentes de type oxydes d'alcalino-terreux dopés avec un ou plusieurs lanthanides de manière à conférer un aspect esthétique particulier au matériau composite lorsque la luminosité ambiante baisse. Selon cette variante particulièrement avantageuse, la matière des filaments est transparente comme le filament de verre et possède un indice de réfraction sensiblement égal à celui de la résine. Par exemple, on choisira idéalement de combiner le filament de verre et la résine acrylique qui ont tous les deux un indice de réfraction de 1,5.

Selon une autre variante, les pigments phosphorescents peuvent être combinés avec des fluorophores spécifiques afin d'obtenir différents couples de couleur jour/nuit.

Grâce à ces différents aspects de l'invention, on dispose d'un matériau composite robuste pouvant présenter un aspect esthétique autre que sportif.

L'invention concerne également un procédé de réalisation d'une pièce en matériau composite conforme à l'invention.

Lors de la première étape, on réalise au moins une première couche, avec des filaments synthétiques, sous la forme d'au moins une nappe unidirectionnelle pré-imprégnée selon une première direction d'orientation. Cette première couche peut comprendre plusieurs nappes unidirectionnelles en filaments synthétiques pré-imprégnées, chaque nappe unidirectionnelle pouvant avoir une orientation distincte.

Ensuite, on réalise au moins une deuxième couche, constituée d'un alliage d'acier type acier inox 316L par exemple, ou un alliage d'acier inox sans nickel type Panacea, ou encore un alliage métallique au moins partiellement amorphe du type alliage base zirconium, base nickel, ou encore base platine, sous la forme d'une feuille mince.

Une préforme est alors constituée en assemblant, par empilage, au moins une première couche et au moins une deuxième couche.

Enfin, la préforme est solidarisée par le biais d'une étape de polymérisation ou de réticulation de la résine sous pression et selon un cycle de température prédéterminée.

Après refroidissement, la préforme peut être usinée en plusieurs blocs de dimensions équivalentes par exemple. On peut également prévoir d'usiner la préforme solidifiée aux cotes finales de la pièce à obtenir.

Selon un autre mode de réalisation, la préforme peut être formée au moyen d'un enroulement de type filamentaire, de manière à fabriquer des pièces cylindriques creuses. Pour ce faire, des fines nappes unidirectionnelles de largeurs de 1 mm à 5 mm imprégnées de résine sont enroulées autour d'un mandrin qui joue le rôle d'un moule intérieur. Sur le même mandrin et dans le même temps, des fines bandes d'alliage métallique de 2 mm à 5 mm de largeur sont enroulées de manière juxtaposée aux nappes unidirectionnelles ou de manière superposées avec un angle pouvant varier de 120° à 180°. Selon les besoins de l'homme du métier, une pluralité de première et deuxième couches 10, 20 qui peuvent être superposées jusqu'à obtenir l'épaisseur désirée.

A noter que l'angle de découpe de la préforme peut être choisi de manière à obtenir un motif bien précis pour la pièce finale.

Les composants sont ensuite usinés dans la préforme obtenue, et peuvent être traités avec un revêtement transparent de type sol-gel. Avantageusement, un tel revêtement peut contenir un mélange de prépolymères de types silanes fonctionnels et silanes hydrolysables, le revêtement est déposé en surface puis traité thermiquement. Bien évidemment, d'autres types de revêtement sélectif peuvent être utilisés, par exemple, après un traitement PVD cuivre/or puis un masquage de la zone hors décor, un électroformage par exemple en or permet de réaliser sur le composant fini un décor spécifique en 3D.

Un tel procédé permet de fabriquer des pièces d'horlogerie en matériau composite conforme à l'invention. Ainsi, des boites de montre, des cadrans, des platines, des ponts, des lunettes, des rehauts, des couronnes, des poussoirs, des boucles, des fermoirs ou encore des appliques destinées à être assemblées sur les cadrans peuvent être fabriqués.

Un tel matériau est particulièrement intéressant pour fournir des pièces d'horlogerie particulièrement légères, très résistantes, et alliant l'aspect esthétique d'un métal ce qui permet de se démarquer des matériaux composites classiques.

A titre d'exemple illustratif et non limitatif, une platine de mouvement peut être réalisée à partir d'un matériau comprenant une succession de premières couches 10 comprenant quatre nappes unidirectionnelles en filaments de carbone pré-imprégnés avec une résine époxy chargée avec 1% de nano-diamants, et de deuxièmes couches 20 en alliage nickel titane, et combinerait les avantages de ténacité, d'amortissement des chocs, de résistance aux rayures et de légèreté particulièrement recherchés dans l'horlogerie.

Un tel matériau est également intéressant pour réaliser des pièces de bijouterie. On peut par exemple réaliser des boutons de manchettes, ou encore des bracelets à partir du matériau composite conforme à l'invention.

Bien entendu, la présente invention ne se limite pas à l'exemple illustré et est susceptible de diverses variantes et modifications qui apparaîtront à l'homme de l'art.

## Revendications

1. Matériau composite pour la réalisation de pièces, comprenant au moins une première couche formée d'au moins une nappe unidirectionnelle de filaments synthétiques pré-imprégnés d'une résine thermodurcissable, la nappe unidirectionnelle présentant une première orientation, et au moins une deuxième couche formée par une feuille mince en un matériau métallique.

2. Matériau composite selon la revendication 1, dans lequel le matériau métallique est un alliage nickel titane.

3. Matériau composite selon la revendication 1, dans lequel le matériau métallique est un métal ou un alliage métallique au moins partiellement amorphe.

4. Matériau composite selon l'une quelconque des revendications 1 à 3, dans lequel la nappe unidirectionnelle de filaments synthétiques pré-imprégnés présente une épaisseur comprise entre 30 µm et 150 µm.

5. Matériau composite selon l'une quelconque des revendications 1 à 4, dans lequel la feuille mince en matériau métallique présente une épaisseur comprise de préférence entre 40 µm et 150 µm, et plus préférentiellement entre 80 µm et 100 µm.

6. Matériau composite selon l'une quelconque des revendications 1 à 5, dans lequel l'orientation des filaments synthétiques de la nappe unidirectionnelle est choisie parmi les orientations à -90°, -45°, +45° ou 0°.

7. Matériau composite selon l'une quelconque des revendications 1 à 6, dans lequel la première couche comprend de préférence au moins deux nappes unidirectionnelles superposées, chacune ayant une orientation distincte, et plus préférentiellement au moins trois nappes unidirectionnelles superposées, chacune ayant une orientation distincte.

8. Matériau composite selon l'une quelconque des revendications 1 à 7, comprenant une pluralité de premières et deuxièmes couches.

9. Matériau composite selon l'une quelconque des revendications 1 à 8, dans lequel les filaments synthétiques sont choisis parmi : les filaments de carbone, les filaments de verre, les filaments en carbure de silice, les filaments en polyéthylène de masse molaire très élevée (UHMWPE), les filaments de polymère à cristaux liquides (LCP), les filaments de quartz, les filaments de carbure de silicium, les filaments en aramides, ou encore les filaments en Polytéréphtalate d'éthylène (PET).

10. Matériau composite selon la revendication 9, dans lequel les filaments synthétiques peuvent recevoir une coloration.

11. Matériau composite selon l'une quelconque des revendications 1 à 9, dans lequel la résine thermodurcissable est une résine de la famille des polyépoxydes, de la famille des acryliques, de la famille des polyuréthanes ou encore de la famille des polysiloxanes.

12. Matériau composite selon la revendication 11, dans lequel la résine thermodurcissable peut comprendre des charges colorées, des charges photoluminescentes, des charges de nanotubes de carbone ou encore des charges de nano-diamants.

13. Procédé de réalisation d'une pièce en composite, comportant au moins une première couche, et au moins une deuxième couche, **caractérisé en ce qu'**il comporte les étapes suivantes :
- réaliser au moins une première couche, avec des filaments synthétiques, sous la forme d'une nappe unidirectionnelle pré-imprégnée selon une première direction d'orientation;
- réaliser au moins une deuxième couche, avec un matériau métallique, sous forme de feuille mince ;
- constituer une préforme en assemblant par empilage au moins une première couche et au moins une deuxième couche ;
- solidariser la préforme par le biais d'une étape de polymérisation ou réticulation de la résine sous pression négative et selon un cycle de température, puis refroidir la préforme.

14. Procédé selon la revendication 13, dans lequel la première couche comprend une pluralité de nappes unidirectionnelles pré-imprégnées.

15. Procédé selon la revendication 13, dans lequel on superpose une pluralité de premières et deuxièmes couches.

16. Pièce d'horlogerie en matériau composite obtenue à partir d'un matériau composite selon les revendications 1 à 12.

17. Pièce de bijouterie en matériau composite obtenue à partir d'un matériau composite selon les revendications 1 à 12.
